# EUROPEAN PATENT SPECIFICATION

(11) **EP 2 906 384 B1**
(45) Date of publication and mention of the grant of the patent: **04.07.2018**
(21) Application number: 13794945.9
(22) Date of filing: 14.10.2013
(51) Int. Cl.: B23K 9/095, B23K 9/12, B23K 9/032

(54) **METHODS AND SYSTEMS FOR WELD CONTROL**
VERFAHREN UND VORRICHTUNG ZUR STEUERUNG EINES SCHWEISSPROZESSES
PROCÉDÉS ET SYSTÈMES DE COMMANDE DE SOUDAGE

(30) Priority: 12.10.2012 GB 201218383
(43) Date of publication of application: 19.08.2015
(73) Proprietor: Meta Vision Systems Limited, Oxford, Oxfordshire OX29 4TH (GB)
(72) Inventor: BEATTIE, Robert J, Glasgow Strathclyde G74 4UA (GB)
(74) Representative: Murgitroyd & Company
(86) International application number: PCT/GB2013/052677
(87) International publication number: WO 2014/057290

(56) References cited:
- EP-A2- 0 770 445
- EP-A2- 2 189 786
- JP-A- H09 277 051

## Description

### FIELD

The present invention relates generally to welding technologies, and more particularly to methods and systems for monitoring progress of a welding operation forming a joint between two workpieces, such as known from EP-A-0770445. The invention may be applied to support improved manual control or to improve automatic control of a welding operation.

### BACKGROUND

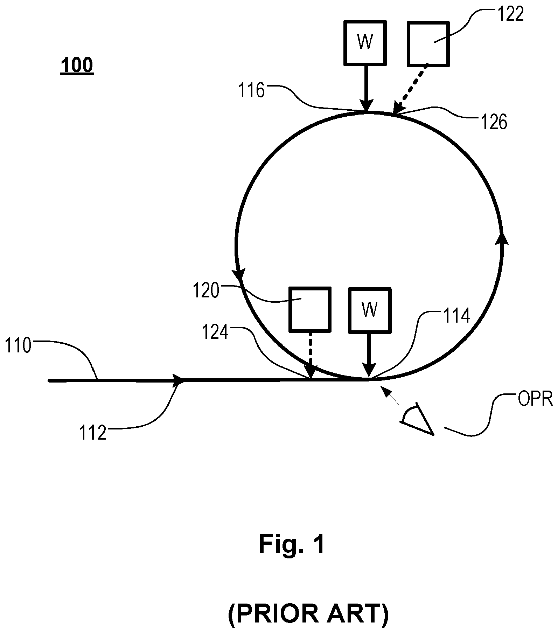

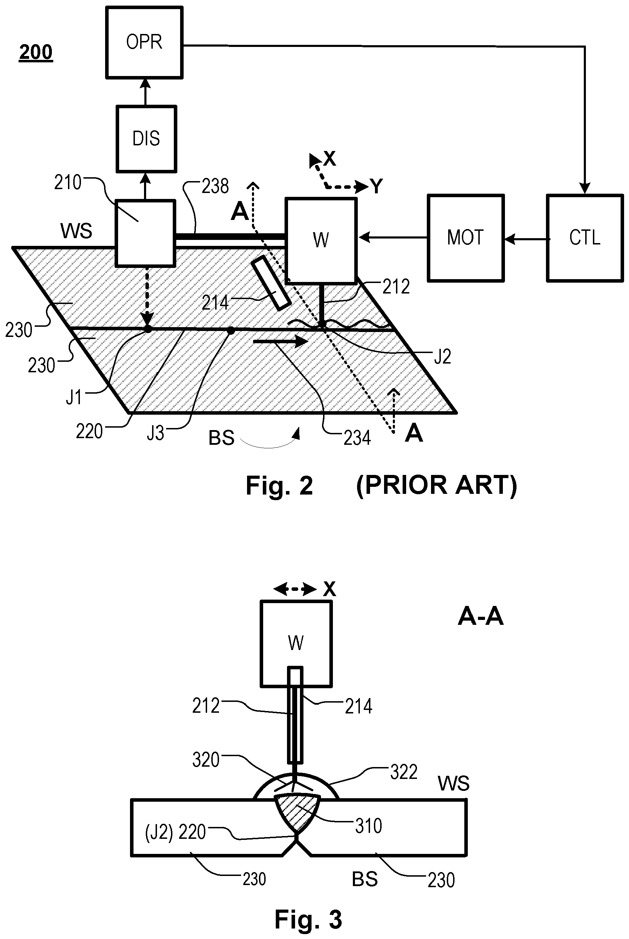

The use of weld scan tracking sensors for guidance and control in welding operations is well established. An example of this in the use of laser sensors to control spiral pipe welding, as described further below with reference to Figures 1 and 2. The laser sensor observes a shape profile of the workpieces to identify the position of a weld joint to be welded. This can be used by a controller to adjust the position of a welding head and keep the welding head operating at a target location. However, the inventor has recognised that the known control systems cannot guarantee that the weld has been made correctly. Additionally, separate inspection and testing steps may be required to prove that the weld has actually been formed along the correct line, and to implement corrections.

The inventors have sought to enable a method of monitoring and/or controlling a welding operation, by which deviations of a weld from a target position can be identified, and potentially corrected in real time such that the relationship between the actual weld and the weld joint is known as part of the method.

### SUMMARY

Various embodiments of the present invention are provided to address one or more of the drawbacks of the aforementioned prior art. In particular, a weld control technique is proposed to prove whether the weld has actually been deposited at a target position or correctly in the weld joint.

According to a first aspect of the invention, there is provided a method of monitoring progress of a welding operation forming a joint between two workpieces. The welding operation is performed at a welding location, and the welding location is progressing along a weld path by arranging relative motion between a welding head and the workpieces. The method comprises using a workpiece tracking sensor to track the position of the workpieces in a direction transverse to the weld path, based on observation of the workpieces at a target sensing location in the vicinity of the welding location; using a weld tracking sensor to observe a thermal profile of the workpieces in said transverse direction at a weld sensing location downstream of the welding location; and comparing results of the workpiece tracking sensor and the weld tracking sensor in a common reference frame, to detect transverse deviation of the welding location relative to a target position on the workpieces.

According to a second aspect of the invention, there is provided an apparatus for monitoring a welding operation forming a joint between two workpieces. The welding operation is performed at a welding location, and the welding location is progressing along a weld path by arranging relative motion between a welding head and the workpieces. The apparatus comprises a workpiece tracking sensor configured to observe the workpieces at a target sensing location in the vicinity of the welding location for tracking the position of the workpieces in a direction transverse to the weld path; a weld tracking sensor configured to observe the workpieces at a weld sensing location downstream of the welding location for obtaining a thermal profile of the workpieces in the transverse direction; and a processing arrangement configured to compare observations made by the workpiece tracking sensor and the weld tracking sensor in a common reference frame, to detect transverse deviation of the welding location relative to a target position on the workpieces.

According to a third aspect of the invention, there is provided a welding control system comprises an actuator configured to adjust a transverse position of a welding location during a welding operation in which the weld location progresses along a weld path by arranging relative motion between a welding head and the workpieces; a controller operable to control the actuator to correct transverse deviation of the weld location relative to a target position on said workpieces; and a monitoring apparatus as described above for detecting transverse deviation of the welding location relative to the target position.

The above and other aspects, features and advantages of the invention will be understood by the skilled reader from a consideration of the following detailed description of exemplary embodiments.

### BRIEF DESCRIPTION OF THE DRAWINGS

Embodiments of the invention will now be described, by way of example only, with reference to the accompanying schematic drawings in which corresponding reference symbols indicate corresponding parts.
Figure 1 is a schematic view of welding operations being performed to form a spiral welded pipe in a known manner.
Figure 2 is a more detailed view of a welding operation with a known monitoring apparatus.
Figure 3 shows a schematic cross sectional view of the welding operation along the dotted line A-A of Figure 2.
Figure 4 illustrates the form and operation of a laser sensor that can be used as a workpiece tracking sensor in the apparatus of Figure 2.
Figure 5 is schematic view of a welding process of producing a spiral welded pipe monitored using a workpiece tracking sensor and a weld tracking sensor in an embodiment of the present invention.
Figure 6 is a more detailed schematic view of a welding operation with a monitoring and control system according to an embodiment of the present invention.
Figure 7 shows exemplary shape profiles that might be obtained by workpiece tracking sensors in the process of Figures 5 and 6.
Figure 8 illustrates the measurement of transverse deviation in the monitoring and control system of Figures 5 and 6.
Figure 9 illustrates the measurement of deviation in an embodiment of the monitoring and control system having a stereoscopic camera as a workpiece tracking sensor.
Figure 10 illustrates the measurement of deviation in an embodiment where workpiece tracking sensor and weld tracking sensor are integrated in a combine sensing unit with shared optical components.
Figure 11 shows a schematic view of a welding process of producing a spiral welded pipe monitored using a combined sensing unit in an exemplary embodiment where a laser, a thermal camera and a triangulation camera are integrated in a same housing.

### DETAILED DESCRIPTION OF EXEMPLARY EMBODIMENTS

Various embodiments are now described with reference to the drawings, wherein like reference numerals are used to refer to like elements throughout. In the following description, for purposes of explanation, numerous specific details are set forth in order to provide a thorough understanding of one or more embodiments. It may be evident, however, that such embodiments may be practiced without these specific details. In other instances, well-known structures and devices are shown in block diagram form in order to facilitate describing one or more embodiments.

Figure 1 is a schematic view of a known weld process for producing, as a particular example, a spiral welded pipe. In the welding process, a continuous strip of steel 110 is fed in the direction 112. To produce spiral pipe, the steel strip 110 is formed by rollers (not shown) into a helix so as to form a tube. Two adjacent turns of the formed strip effectively form two workpieces to be joined along a continuous line, and are welded continuously by welding heads W at two positions 114 (inside diameter or "ID" weld) and 116 (outside diameter or "OD" weld). The tube thus formed is fed out of the process along an axis extending into (or out of) the page. Laser vision systems 120 and 122 are placed to observe the shape of the join, at positions 124, 126 ahead of the welding positions 114 and 116, respectively. The welding operation that can be used in the welding system 100 of Figure 1 will now be explained in a little more detail by reference to Figure 2.

Figure 2 is a schematic view of a conventional welding system 200 featuring a known monitoring system for control of a transverse weld position. In the conventional welding system 200, a welding head W having a welding electrode 212 can be driven by the motor unit MOT to move back and forth in a transverse direction, labelled X for the sake of example. In the case of submerged arc welding process, a flux dispensing unit 214 is placed ahead of the welding electrode 212 to dispense flux. A joint line 220 extends in a longitudinal (Y) direction where the two workpieces 230 abut one another and are to be welded together. The welding head and workpieces are supported so as to move relative to one another along this Y direction. It is a matter of implementation, whether the welding head moves while the workpieces stay still, or vice versa. The choice can be made differently for the X and Y directions. It is assumed for the sake of example that the weld line 220 is straight and infinite. Of course a practical implementation has to consider stop and starting of the weld, and some applications may require a convoluted weld line.

In producing a spiral pipe, it is generally preferred to move workpieces 230 relative to the welding electrode 212 along the line 220, as indicated by arrow 234 in Figure 2. The welding electrode can be supported to remain substantially stationary in the Y direction, while moving in a transverse (X) direction to track the joint line accurately. In a known process, a laser vision system 210 is placed to look ahead at the shape profile of the workpieces, to locate the joint line 220. To have a same speed as the welding head W, the laser vision system 210 is connected to welding head W by a framework 238 (represented schematically by a single bar) 238. The obtained shape profile of the weld joint can be displayed on a screen DIS to provide a basis for manual control by an operator OPR. With the displayed shape profile of the weld joint, the operator OPR can control the movement of the welding head W through the controller CTL. As shown in Figure 2, the laser system 210 looks at the shape profile of the workpieces at a position J1 at the welding side WS, that is the same side from where the welding head W performs welding at position J2. A back side of the workpieces is labelled BS. The shape profile of the weld joint J1 is used by the operator OPR to judge whether the position of welding head W should be adjusted in the X direction so that the weld can be formed accurately at the join in the workpieces.

Figure 3 shows the conventional welding system 200 operating, in a schematic cross sectional view along the dotted line A-A' of Figure 2. At the welding side WS, molten weld pool 310 is formed under the welding arc 320 provided by the welding electrode 212. The formed weld pool 310 is under a blanket of flux 322 dispensed from the flux dispensing unit 214. This layer of flux 220 can cover the weld pool 310 to shield it from atmospheric contamination, and prevent spatter and sparks. The flux layer 220 also suppresses the radiation of ultraviolet light from the weld pool 310 at the welding side WS.

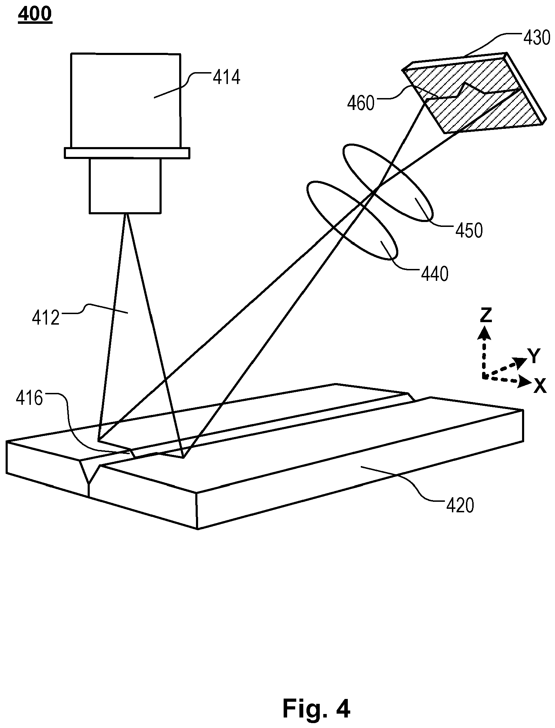

An exemplary laser vision system 400 that can be used as the laser vision system 210 of Figure 2 is shown in Figure 4. In the laser system 400, a laser is used as a source of light, and a laser beam 412 is projected from a projector 414 onto a join line 416 of a workpiece 420. Projector 414 forms an illumination system spreading the laser beam 412 in a fan shape within a plane that in this example is approximately normal to the plane of the workpieces and transverse to the join line. The illumination forms a line following the contours of the workpieces. In the example shown, two bevels on the workpiece edges lead to a V-shaped profile along the join line. Such bevels typically formed to facilitate welding between steel plates of substantial thickness. The illuminated part of the workpieces is then imaged by an image sensor 430 such as a charged coupled (CCD) or a complementary metal oxide semiconductor (CMOS) sensor. Sensor 430 forms part of a camera that includes also a filter 440 and lens 450. The camera is set to observe the workpieces in a direction (in a plane) that is oblique in relation to the illumination plane. In this way, the profile of the workpieces in the normal (Z) direction is translated into deviations of a line 460 that is an image of the illuminated line formed on the sensor By the principle of triangulation, the shape 460 of the laser stripe in the image can be used to extract three dimensional data points representing the shape of the workpieces along the line (more strictly, within the plane) illuminated by the laser. Filter 440 is selected to pass the scattered laser illumination, while blocking ambient light, thereby enhancing the profile signal over.

In a practical example, neither the illumination plane nor the camera axis need to be strictly normal to the workpieces, and the angle between them can be chosen according to constraints of space and the like. While the laser camera based on an image sensor is illustrated as an example, other types of laser camera instrument are known. For example the camera with an image sensor can be replaced by a scanning optical system with a linear sensor. The illumination beam 412 may be steady across the plane, or it may be arranged by scanning a spot back and forth with sufficient frequency.

Using the profile detected by the laser sensor 400, manual or automatic control of the transverse position of the welding head W can be implemented, with the aim of keeping the weld electrode 212 accurately placed on the join line 220/416. However, the accuracy of placement depends not only on straightness of the join line, but also on the accuracy with which the sensor 210 and weld electrode are kept in a known and fixed relationship through framework 238, and on the method whereby a "fine" or "reference" position of the joint in the sensor is stored and used as a basis for subsequent corrections. Any misalignment between these parts or inaccuracy in establishing the fine or reference point, from whatever cause, will lead to a weld being formed off the centre of the join line. In such a conventional welding system, the quality of the welded product depends entirely on the accuracy of an initial calibration of the welding position against the laser. If the initial calibration is wrong or not accurate enough for some reason, that will affect the quality of the whole product. Quality inspections can be made after the fact, but rework or rejection of such large workpieces is very expensive. Direct inspection of the welding operation as it happens is not easy because of the harsh radiation, the flux and gaseous emissions. It is known for the operators OPR to observe with their own eyes the glowing line of the weld at its back side, as illustrated in Figure 1. However, such observation can only detect coarse deviations and may not be able to avoid defects being introduced. This is a particular problem for pipes or other pieces with the highest specifications of weld quality.

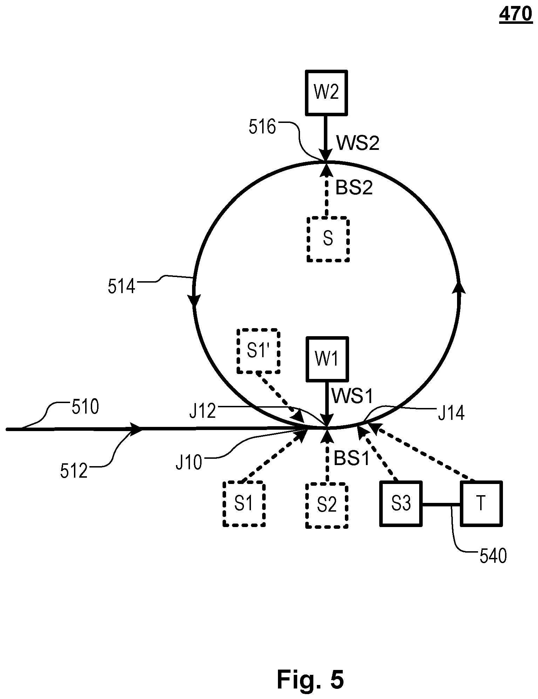

Figure 5 is schematic view of a welding process of producing a spiral welded pipe monitored and controlled according to an embodiment of the present invention.

According to Figure 5, a spiral weld pipe is formed in substantially the same manner as shown in Figure 1. A steel strip 510 is fed along a direction as indicated by an arrow 512. The steel strip is formed into a helical path by rollers (not shown) and after a complete rotation, a rolling spiral pipe portion 514 starts to pair with the incoming portion 510 to form a join line effectively between two workpieces 510, 514 at a position J10. Workpieces 510 and 514 are further moved together to a position J12 where they can be welded together under a first (inside) welding head W1. Diametrically above at position 516, a second (outer) welding head W2 forms a second weld. The weld side WS2 and back side BS2 of the second weld correspond respectively to the back side BS1 and weld side WS1 of the first weld. It is understood that the embodiments described herein can be similarly applied to inspect the second weld. As the second weld is a case of OD weld, the sensing means of the present invention can be placed within the spiral pipe to look at the back side BS2 of the second weld, from the inside of the pipe. Since the inside weld has already been formed, the workpiece tracking sensor will be set up to follow the bead of the ID weld, rather than an unwelded groove.

Differences from the operation of Figure 1 are in the monitoring and, optionally, control processes applied in the process of Figure 5. Considering the first weld formed at position J12, one or more workpiece tracking sensors S1, S2, S3 are provided, which may for example be laser cameras similar to the one described in Figures 1 to 4. Additionally, a weld tracking sensor T is provided, which can be used to observe the completed weld at position J14. In the exemplary embodiments of the present invention, weld tracking sensor T is placed at a weld sensing location J14 downstream of a welding location. It may conveniently be placed at the back side BS1 of the welding head being monitored or controlled.

One or more workpiece tracking sensors S1-S3 may be placed to look at a shape profile of a weld joint. Each workpiece tracking sensor is placed at a target sensing location in the vicinity of the welding location. As shown in Figure 5, three possible positions for workpiece tracking sensors S1, S2 and S3 are placed to observe the workpieces at positions J10, J12 and J14 respectively along the join line. In a particular example, the workpiece tracking sensor S3 is used to observe the back side of the weld at substantially the same position J14 as the weld tracking sensor T. Both sensors are arranged to detect a transverse profile across the weld, that is an X-direction profile in the notation introduced earlier. The difference is that sensor S3 observes the shape and/or colour profile of the workpieces, typically in visible light, while sensor T observes a thermal profile of the workpieces, downstream of the weld location. Sensor S3 is rigidly connected to weld tracking sensor T by a framework 540. Thus the profiles observed using the difference sensors can be compared in the X direction.

Sensors S1, S2, where provided, may be fixed to the same framework 540. A sensor S1' maybe provided at the weld side WS1 of the workpieces, in addition to or alternatively to placing a sensor at the back side BS1. Framework 540 may itself be coupled to the welding head by another framework (not shown) so as to move together with the welding head in the same manner as in Figure 2. This is optional. Although all of the workpiece tracking sensors S1-S3 shown in Figure 5 are placed at the back side of the welding side WS 1, in another example one or more of the workpiece tracking sensors S1-S3 may be placed at the welding side WS1. For the example of spiral pipe welding, it is advantageous that the various sensors can be placed outside the diameter of the pipe, where space is less of a problem.

As shown in Figure 5 and mentioned above, a further welding process can happen at position 516 by using a second welding head W2. The further welding process completes the joining of the workpieces by a weld at the back side of the first weld. As is well known, a good joint requires that the two welds are aligned accurately with one another and have sufficient depth to overlap within the thickness of the workpiece material. It is understood by the skilled person that a similar arrangement of using workpiece tracking sensor(s) S1-S3 and a weld tracking sensor T can be applied to the further welding process around the position 480.

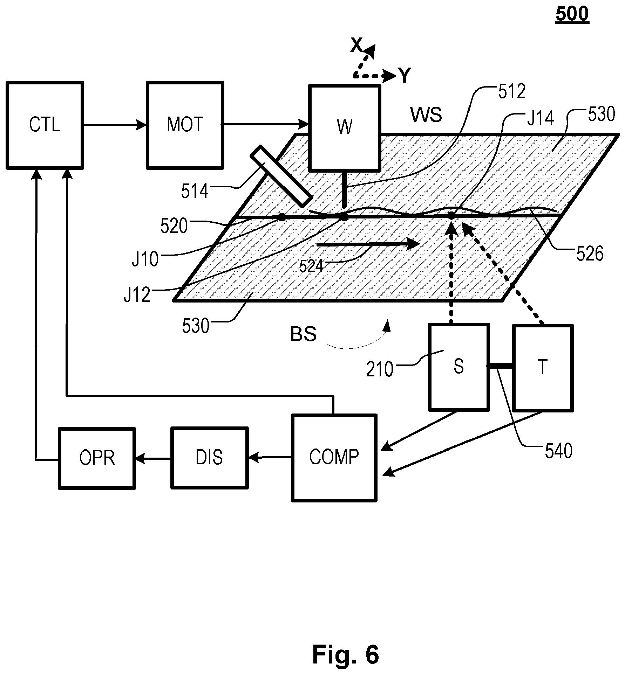

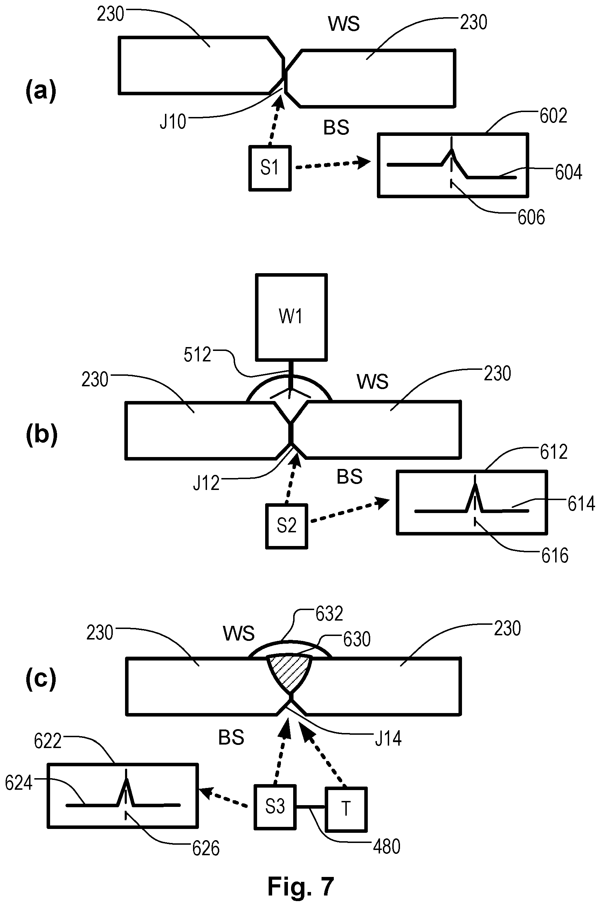

Figure 6 is a more detailed schematic view of a weld control system 500 according to an embodiment of the present invention. This is presented in a manner similar to Figure 2, and reference signs with prefix '5' instead of '2' represent similar components. A welding head W having a welding electrode 512 and a flux dispensing unit 514, is provided with a transverse positioning system comprising a motor unit MOT, a controller CTL, a workpiece tracking sensor S, a weld tracking sensor T and a comparison unit COMP. As shown in Figure 7, weld control system 500 is capable of welding along a line 520 of weld joint between workpieces 530. The workpieces may be adjacent turns of a single strip of metal, when the process is used to form spiral pipe in the manner of Figure 5.

Welding head W is placed at the welding side WS of workpieces 530. Welding head W can be driven by motor unit MOT under control signals from controller CTL to place welding electrode 512 to a desired position, particularly in a transverse (X) direction. Flux dispensing unit 514 is placed ahead of welding head W to dispense flux along the join line 520.

To weld the workpieces 530 together, welding electrode 512 is moved relative to the workpieces along in the longitudinal or Y direction . In one example as shown in Figure 5, this relative movement is provided by moving the workpieces 522 relative to welding electrode 510, which remains stationary. The direction of movement of the workpieces 530 relative to the welding head is indicated as arrow 524 in Figure 5. However, it is understood that in another example the welding process can be performed by moving welding head W relative to the workpieces, while the pieces remain stationary. A combination of two motions can also be envisaged. The same or different mode of motion can be applied in the X and Y directions.

Motor unit MOT can drive welding head W in at least the transverse directions, in response to control signals from controller CTL. As shown in Figure 7, a longitudinal or Y direction is substantially parallel to the line 526 of weld joint, which may be called a weld path, while an X direction is transverse to the weld path. The naming of these directions is of course a matter of choice. The weld path need not be straight, but can be convoluted if the application requires it. The control systems, supporting structures and motors will of course need adapting in that case.

In this embodiment, workpiece tracking sensor S and weld tracking sensor T are both placed at the back side of the welding side WS of workpieces 522, observing substantially the same position J14. The difference is that sensor S observes features of the workpieces, for instance their shape profile, while weld tracking sensor T senses a thermal profile, revealing the position of the weld itself, through residual heat. However, in another embodiment workpiece tracking sensor and weld tracking sensor may not be placed at the back side of the welding side WS. For example, sensors S and T may be both placed the welding side WS, or placed at different sides of workpieces 530. Sensor S and sensor T both observe the workpieces at the position J14, backside corresponding to the position of sensor S3 in Figure 5. Alternative or additional sensors S1, S2, S1' can be provided, if desired.

Weld tracking sensor T may include a function of weld position determination configured to determine a transverse position of the weld by identifying a peak position or other indicative signal within a thermal profile obtained from a thermal image. The determined position may then be reported to the comparison unit. Alternatively, the weld position determination function may be implemented within comparison unit COMP or in an independent unit.

Similarly, workpiece tracking sensor S may include a target position determination function, configured to determine a target position of workpieces 522 based on a transverse shape profile of the workpieces 522. Alternatively, the target position determination function may be implemented within comparison unit COMP, or in an independent unit.

As further illustrated in later figures, workpiece tracking sensor S can be placed to obtain a shape profile of the back side of the weld joint J, downstream of the welding operation. Where the workpieces have bevelled edges at both weld side and back side, the back side bevel provides a strong shape profile for tracking, and a profile which can be observed strongly at a position downstream of the welding head. In principle, the sensor S, or additional sensors S, can be placed at other locations downstream or upstream of the welding head W. In order to observe the workpiece position and profile independently of the weld operation, sensor S, if placed at the weld side, should be upstream of the welding operation. Weld tracking sensor T can be placed at either the weld side or the back side, but needs to be placed downstream of the welding head to obtain a thermal profile of the weld after it has been made.

In the example of Figure 6, to obtain a shape profile, workpiece tracking sensor S may have the same form as the laser camera of Figure 4. An illuminating system provides illumination directed in a plane transverse to the join line 520 (transverse to direction Y) shown in Figure 6, and detects illumination scattered by the workpieces 530 in a plane oblique to the cross sectional plane. Workpiece tracking sensor S is configured to capture a two-dimensional image of the workpieces 522. The target position determination unit is configured to extract a shape profile from the captured image. In one example as shown in Figure 4, the illumination can be provided by a laser unit, which may be a two-dimensional laser image or a laser spot scanning through the cross sectional plane. The camera can be enhanced relative to the simple schematic example illustrated. For example, it may have more than one illumination stripe (plane), resulting in multiple profiles in the camera image. A position or shape profile can be obtained more accurately and reliably by combining multiple profiles to obtain an average, for example direction.

In this embodiment, workpiece tracking sensor S is rigidly connected to thermal sensing unit T through a framework 540 (illustrated schematically by a bar). Therefore both workpiece tracking sensor S and weld tracking sensor T can have a common position reference, and be moved if desired relative to workpieces 522 without losing that common reference. In this way, the location of features in the transverse direction can be accurately compared, between the workpiece shape profile and the thermal profile. Although workpiece tracking sensor S is shown at the back side of the welding side WS in Figure 7, in another example workpiece tracking sensor S can be placed at the welding side WS.

The shape profile from workpiece tracking sensor S indicates the position of the join line between workpieces, representing the desired position of the weld, while the thermal profile from weld tracking sensor T indicates the actual position of the weld after welding, by sensing the distribution of residual heat in the metal in the region of the joint.

Figure 7 shows exemplary shape profiles of the workpieces at different positions (a) J10, (b) J12 and (c) J14, together with and the resulting image signals that may be obtained by workpiece tracking sensors S1-S3 of Figure 5. Figure 7(a) shows an image 602 of the workpieces, as might be obtained by sensor S1 at position J10. A bright line 604 in the image shows how the transverse shape profile of the workpieces is revealed by the laser illumination. A broken line 606 indicates the position of the join line that can be deduced from the profile. Because the process is assumed to be a helical forming process where the flat strip 510 is formed to meet a previously curved portion, the workpieces are slightly offset from one another at the upstream position J10, leading to some asymmetry in the profile 604. Figure 7(b) shows and image 612 showing shape profile 614 of the workpieces across the join line at position J12 under welding head W1 which has electrode 512 to perform welding under the cover of flux 622. The profile at this point is substantially symmetrical and broken line 616 indicates the position of the join line 520. Figure 7(c) shows image 622 and shape profile 624 of the workpieces at position J14, and the dotted line 626 indicates the position of the join line. A weld 630 has been formed, which may typically be under a cap of fused flux 632. Although the overall shape profiles 604, 614 and 624 may be different, for example, depending on the strip edge preparation, they can be analysed to obtain the position of the join line at the positions J10, J12 and J14 of Figure 5, respectively, as indicated by the broken lines 606, 616 and 626.

While such profiles are known and obtained using laser cameras in known weld monitoring and control systems, the new system of Figures 5 and 6 additionally uses a thermal profile obtained by weld tracking sensor T. This thermal profile, representing the actual position where the weld has taken place, can be used to compare the position of the join line with the position of the weld, to prove whether a weld has actually be deposited at a desired position, which is further explained by reference to the drawings below.

Returning to Figure 6, the shape profile and the thermal profile of the weld joint are compared by comparison unit COMP as a means to determine whether the weld has been made in the right position. Comparison unit COMP may be part of controller CTL, or may be a unit independent of controller CTL. In one example, the comparison results from unit COMP may be used to feed to controller CTL as part of the control loop for automatic weld control, and consequently the welding head positioning system includes the comparison unit COMP. In another example, the comparison results from unit COMP may be displayed on a screen DIS and reviewed by a human operator OPR, thereby providing a basis for manual control of the weld position of welding electrode 510.

The comparison of results from the workpiece tracking sensor S and weld tracking sensor T is made within comparison unit COMP. This unit can be implemented in a variety of ways, combining digital and/or analogue signal processing hardware, for processing signals from the various sensors. The functions can be implemented at least in part by software on a programmed microcontroller and/or DSP (digital signal processor). The sensors themselves may take different forms, and different processing will be required accordingly. The sensors S and T in this example are both based around 2-D image sensors, with corresponding image processing functions being implemented in the sensor units and/or in the comparison unit. The invention is not at all limited to image-based sensors.

IN a simple embodiment, the comparison can be made between two positions that have been derived from the respective profiles. Alternatively, the comparison may be made by comparing the profiles as a whole (for example by convolution). In principle, the images themselves could be processed directly together to implement the comparison.

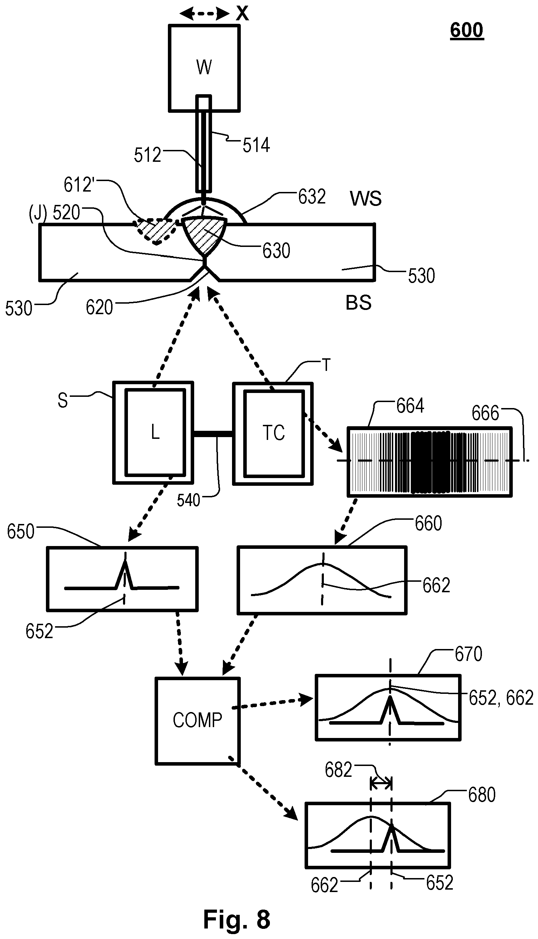

Figure 8 is a schematic view of the monitoring process including comparison of a workpiece profile from workpiece tracking sensor S and a thermal profile from sensor T as shown in Figures 6 and 7. In this example, sensor S includes a laser camera L of the type shown in Figure 4 for tracking a shape profile of the workpieces, and sensor T includes a thermal camera TC.

At the welding side WS of workpieces 530, weld pool 630 is formed under the welding arc 614 provided by welding electrode 512. The welding electrode 512 and flux dispenser 514 are shown in the view of Figure 8, the cross section through the workpieces is at a sensing location somewhere downstream of the welding head. The formed weld 630 is under a blanket of flux 632.

At the back side of the workpieces 522, laser sensing unit L and thermal camera TC are placed to look at the back side of the welded joint at the sensing location. An exemplary shape profile image as detected by laser camera L is shown as 650 in Figure 8, while an exemplary thermal profile of the back side of weld joint as obtained by thermal camera TC is shown as 660. The position of a peak of shape profile 650 is indicated by a broken line 652, and a peak of thermal profile is indicated by a broken line 662.

To obtain thermal profile 660, weld tracking sensor T may perform data sampling on a thermal image 664 and extract temperature information across a line 666 of pixels within thermal image 664. The temperature profile may be averaged from several lines, to improve signal to noise characteristics. This processing can be performed within electronics of the thermal camera, or in a separate processor, or within the comparison unit COMP.

Peak line 652 of shape profile 650 indicates the position of the abutting edges of the workpieces, that is the join line 520, and peak line 662 of thermal profile 660 indicates the actual position of the weld 612. Therefore, the two profiles 650 and 660 can be compared by comparison unit COMP to prove whether the weld has been deposited on the right place. As shown by the superimposed profiles at 670, if the peak 652 of the shape profile 650 represents substantially the same transverse position as the peak temperature in thermal profile 660 of weld 612, it is proved that the weld has been deposited on the desired place. A display DIS may be controlled to display the superimposed profiles 670. A textual or other indicator may be displayed to show that the weld is in the correct position. A quality control record of the welded product may be updated with the confirmed good alignment. In alternative superimposed profiles 680, there is a distance 682 between the line 652 and the line 662. This that means that the peak in residual heat is offset from the position of the bevelled join line 520, and it may be deduced that the weld has not been deposited to the desired place. For example, the weld may have been deposited to an undesired position at 612'. In a monitoring role, the display may show the superimposed profiles 680. A deviation value representing the distance 682 (and its direction/sign) may be displayed, and one or more alarm or flags may be generated if the distance exceeds predefined limits. The quality control record for the welded product is updated with the measured deviation, and the product may be designated for rework, downgraded in quality classification, or discarded.

Rather than simply monitoring for out-of-specification welds, of course, it is possible to feed back the calculated deviation as a correction to adjust the position of the welding head and eliminate or reduce the deviation. This may be done by manual control, where the operator OPR observes display DIS and instructs controller CTL to operate motor MOT to adjust the transverse position of the welding head or welding electrode. In the example of Figure 6, the calculated deviation may be used automatically by controller CTL to adjust the transverse position of welding head W. This forms a closed loop control based on the actual position of the weld. Signals from additional sensors may also be used in the control loop. For example additional workpiece tracking sensor may be positioned upstream of the welding head, just as in the known process. The measured deviation 682 may then be used to apply an offset additional to control based on the upstream sensor.

The comparison may be aided by arranging the sensors so that corresponding pixels in the two images correspond to the same location on the workpieces. In general, however, this direct comparison may not be practical or accurate. However, a calibration can easily be performed to obtain a scaling factor and/or an offset, by which a pixel in one image representing a transverse position can be related to a pixel in the other image representing the same position. Provided the framework 540 is rigid, the positions can always be compared within a desired accuracy. As mentioned already, the sensors S and T may be mounted to another framework, so as to track also the transverse position of the welding head. In such an embodiment, the calibration needs to be accurate mainly at a central portion of the image field, which may relax design constraints. In either case, the alignment of the workpieces and the actual weld is verified. By contrast in the known arrangement of Figure 2, the alignment of the workpieces and the weld is dependent on accurate alignment of sensor S and welding electrode 212 via framework 238. Only by separate inspection after the welding operation is completed can it be verified that the weld is actually performed within specifications. Moreover, the comparison of the two profiles 650 and 660 can be used for detection of whether an initial/previous calibration performed by an operator is not accurate enough and whether a subsequent correction is necessary.

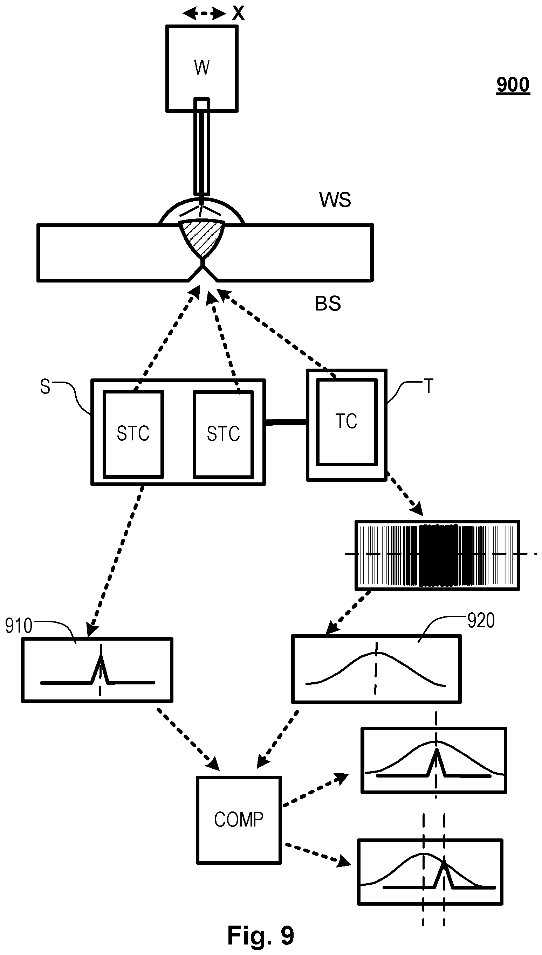

Figure 9 is a schematic view of the comparison of a shape profile 910 from workpiece tracking sensor S and a thermal profile 920 from weld tracking sensor T according to another embodiment of the present invention. The embodiment shown in Figure 9 is substantially similar to an embodiment shown in Figure 8, except that instead of using a laser camera L, workpiece tracking sensor S include a pair of high dynamic range (HDR) cameras STCs to look at the workpieces stereoscopically. A stereo pair of images can be processed to produce a three dimensional model of the workpiece and obtain a shape profile 910. Special illumination may be used in addition to the stereo cameras, to assist profile recognition.

In addition to or instead of using stereo cameras or a laser camera, recognition of the join line between workpieces can be based on colour or brightness of the surface. Particularly with thin workpieces, a bevelled profile may not be present or large enough to be recognisable. However, the edges of the workpieces may have sufficient contrast to be recognisable in the image. Contrast enhancing features can be added to the workpieces, if necessary. Illumination directions and colours can be designed also to enhance recognition.

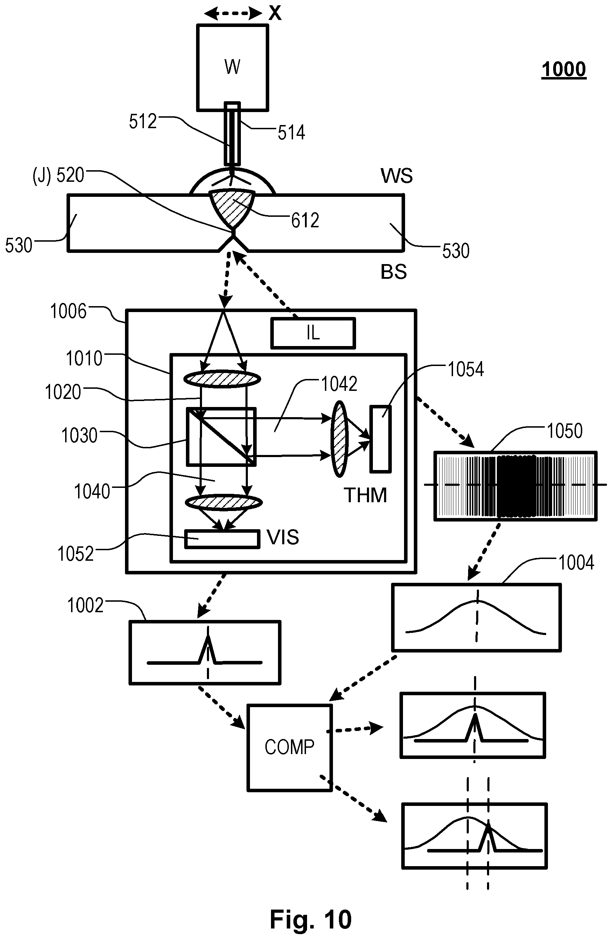

In another embodiment of the present invention, the functions of a workpiece tracking sensor and a weld tracking sensor can be integrated with shared components a single sensing unit, as further explained below by reference to Figure 10.

Figure 10 is a schematic view of the comparison of a shape profile 1002 and a thermal profile 1004 produced by a combined sensing unit 1006. The combined sensing unit 1006 is placed at the back side of the welding side WS to look at the welded joint in a similar manner to the previous examples. A shape profile 1002 and thermal profile 1004 can both be produced by the combined sensing unit 1006.

Within the combined sensor, a common optical system 1010 receives light (more broadly, radiation) 1020 from the workpieces and passes it through a wavelength-selective beam splitter 1030. Visible light 1040 representing a visible image of the workpieces is separated the infrared radiation (infrared light) 1042 representing a thermal image 1050 having the same field of view as the visible image. The visible image and the thermal image can be captured by target image sensor 1052 and thermal image sensor 1052, respectively. For example, the infrared radiation 1042 may have a wavelength close to the near-infrared region of electromagnetic spectrum. Moreover, the arrangement in Figure 10 such as the optical system 1010 is only provided as an example and could easily be adjusted accordingly by a skilled person, for example, upon a selection of wavelength(s) of radiation in interest.

The profile sensing unit 1006 may include processing functions to determine the weld position and target position. It is also possible to place the functions of weld position determination and target position determination outside the profile sensing unit 1006, for example in the comparison unit COMP or as an independent unit. Illumination with one or more stripes of laser light or other special illumination may be provided alongside or within the combine sensing unit, to assist in recognition of the target (join line 520).

Once the shape profile 1002 and the thermal profile 1004 are obtained, the rest of comparison process is substantially similar to the embodiments described above. Note that, by suitable design of the shared optical system 1010, it can be ensured that the image fields of the sensors 1052 and 1054 automatically coincide in a known manner. The requirement to calibration is reduced, and the risk of losing calibration is reduced, also. Instead of wavelength-selective beam splitters, a simple beam splitter may be used, with filters if necessary to select wavelengths processed by each sensor 1052, 1054. In yet another embodiment, a single image sensor can be provided which has pixels sensitive to different wavelengths, such as different visible colours and/or infrared wavelengths. In another embodiment, the sensor may be used with a rotating filter wheel, so as to capture images sequentially at different wavelengths.

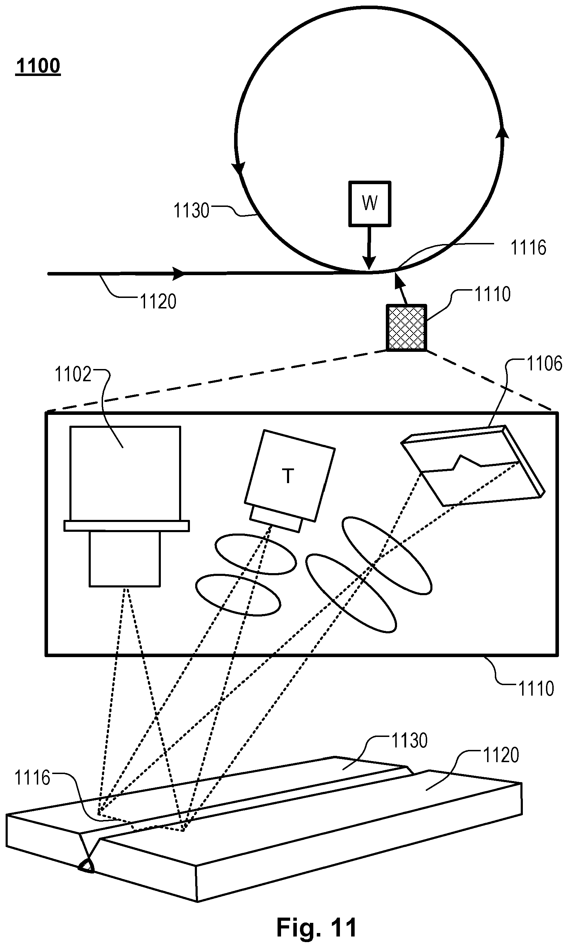

Figure 11 shows a schematic view of a welding process 1100 of producing a spiral welded pipe monitored using a combined sensing unit in another exemplary embodiment of the present invention. The exemplary embodiment show in Figure 11 is very similar to the embodiments shown in Figure 5. However, in this embodiment a laser (not shown) with a projector 1102, a thermal camera T and an image sensor 1106 are combined in a housing 1110, and are configured to look at a same join line 1116 of the workpieces 1120 and 1130.

Unlike the Figure 10 example, this example provides separate optical system for the thermal and visible radiation. This may be useful for example to allow a wider range of infrared radiation, including far infrared wavelengths to be used in the thermal imaging.

Referencing corresponding points in the thermal and visible images can be arranged by physical adjustment of the sensors and the optical system, and/or by adjusting the images after detectors.

The choice of design depends on desired cost and performance criteria. It may depend for example whether the apparatus is to be versatile and useable with a variety of workpiece forms and materials, or whether it can be specialised for example to joining bevelled workpieces of the type illustrated above.

Various aspects or features described herein can be implemented as a method, apparatus, or article of manufacture using standard programming and/or engineering techniques. For example, the weld position determination unit, the target position determination unit and the comparison unit COMP may be implemented at a hardware level or at a software level. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical disks (e.g., compact disk (CD), digital versatile disk (DVD), etc.), smart cards, and flash memory devices (e.g., EPROM, card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

The descriptions above are intended to be illustrative, not limiting. For example, although the above-described embodiments are explained by reference to workpieces with double-V weld joints as an example, it is understood that the above described embodiments can also be applied to workpieces with different types of weld joints such as square butt joints, single or double bevel joints, single-V joints etc. Thus, it is apparent to the one skilled in the art that various modifications may be made to the invention as described without departing from the scope of the invention.

## Claims

1. A method of monitoring progress of a welding operation forming a joint (220) between two workpieces (230, 530), the welding operation being performed at a welding location, the welding location progressing along a weld path by arranging relative motion between a welding head (W) and the workpieces, the method comprising:
(a) using a workpiece tracking sensor (S1-S3) to track the position of the workpieces in a direction transverse to the weld path, based on observation of the workpieces at a target sensing location in the vicinity of the welding location;
(b) using a weld tracking sensor (T); and
(c) comparing results of said workpiece tracking sensor and said weld tracking sensor in a common reference frame, to detect transverse deviation of the welding location relative to a target position on the workpieces; the method being **characterised in that** the weld tracking sensor observes a thermal profile of the workpieces in said transverse direction at a weld sensing location downstream of the welding location.

2. The method of claim 1, wherein said step (c) includes as a preliminary step, step (cb) of determining a transverse position of the weld by identifying a peak position within said thermal profile.

3. The method of claim 1 or 2, wherein said step (c) includes as a preliminary step, step (ca) of determining said target position based on a transverse shape profile of the workpieces measured by said observation.

4. The method of claim 3, wherein said transverse shape profile is obtained by illumination directed in one or more planes transverse to the weld path and detecting illumination reflected by the workpieces in a plane oblique to the illumination plane(s).

5. The method of claim 4, wherein said illumination is by laser.

6. The method of claim 5, wherein step (a) includes capturing a two-dimensional image of the workpieces and step (ca) comprises extracting said shape profile from said image.

7. The method of claim 5, wherein said illumination is by scanning a laser spot through a section of said illumination plane and said detecting reflected illumination is by a scanning sensor synchronised with said scanning of the laser spot.

8. The method of claim 3, wherein step (b) includes capturing a two-dimensional image of the workpieces and step (ca) comprises extracting said shape profile from said image.

9. The method of any preceding claim, wherein said target sensing location is at a back side of the workpieces, opposite to said welding head (W).

10. The method of any preceding claim, wherein said weld sensing location is at a back side of the workpieces opposite to said welding head (W).

11. The method of any preceding claim, wherein said target sensing location and weld sensing location are at substantially the same location along the weld path.

12. The method of claim 11, wherein the observation in step (a) and the observation in step (b) are performed using a shared optical system (1010).

13. The method of claim 12, wherein the observation in step (a) is performed using a target image sensor (1052) forming an image of the workpieces using visible wavelengths and the observation in step (b) is performed using a thermal image sensor (1054) forming an image of the workpieces using infrared wavelengths.

14. The method of claim 13, wherein the observation in step (a) is performed using said target image sensor assisted by illumination in one or more planes transverse to said weld path and oblique to a viewing direction of said image sensor.

15. The method as claimed in any preceding claim, further comprising (d) adjusting a transverse position of the welding head in response to a deviation detected in step (c).

16. The method of claim 15, wherein said step (d) is performed automatically by an automatic welding head positioning system.

17. An apparatus for monitoring a welding operation forming a joint (220) between two workpieces (230, 530), the welding operation being performed at a welding location, the welding location progressing along a weld path by arranging relative motion between a welding head (W) and the workpieces, the apparatus comprising:
- a workpiece tracking sensor (S1-S3) configured to observe the workpieces at a target sensing location in the vicinity of the welding location for tracking the position of the workpieces in a direction transverse to the weld path;
- a weld tracking sensor (T); and
- a processing arrangement configured to compare observations made by said workpiece tracking sensor and said weld tracking sensor in a common reference frame, to detect transverse deviation of the welding location relative to a target position on the workpieces; and the apparatus being **characterised in that** the weld tracking sensor is configured to observe the workpieces at a weld sensing location downstream of the welding location for obtaining a thermal profile of the workpieces in said transverse direction.

18. The apparatus of claim 17, wherein said processing arrangement is configured to determine a transverse position of the weld by identifying a peak position within a thermal profile obtained from the weld tracking sensor.

19. The apparatus of claim 17 or 18, wherein said processing arrangement is configured to determine said target position based on a transverse shape profile of the workpieces observed by said workpiece tracking sensor.

20. The apparatus of claim 19, wherein the workpiece tracking sensor is arranged to provide illumination directed in one or more planes transverse to the weld path and detect illumination reflected by the workpieces in a plane oblique to the illumination plane(s).

21. The apparatus of claim 20, wherein the workpiece tracking sensor includes a laser and said illumination is by the laser.

22. The apparatus of claim 21, wherein the workpiece tracking sensor is configured to capture a two-dimensional image of the workpieces, and the processing arrangement is configured to extract said shape profile from said image.

23. The apparatus of claim 19, wherein the workpiece tracking sensor is configured to capture a two-dimensional image of the workpieces, and the processing arrangement is configured to extract said shape profile from said image.

24. The apparatus of any of claims 17 to 23, wherein said target sensing location is at a back side of the workpieces, opposite to said welding head (W).

25. The apparatus of any of claims 17 to 24, wherein said weld sensing location is at a back side of the workpieces opposite to said welding head (W).

26. The apparatus of any of claims 17 to 25, wherein said target sensing location and weld sensing location are at substantially the same location along the weld path.

27. The apparatus of claim 26, wherein the workpiece tracking sensor and the weld tracking sensor are arranged to observe the workpieces through a optical system.

28. The apparatus of claim 27, wherein the workpiece tracking sensor comprises a first image sensor configured to form an image of the workpieces using visible wavelengths, and the weld tracking sensor comprises a second image sensor configured to form an image of the workpieces using infrared wavelengths.

29. The apparatus of claim 28, wherein said workpiece tracking sensor further comprises an illumination arrangement for illuminating the workpieces with illumination in one or more planes transverse to said weld path and oblique to a viewing direction of said first image sensor.

30. A welding control system comprising:
an actuator configured to adjust a transverse position of a welding location during a welding operation in which said weld location progresses along a weld path by arranging relative motion between a welding head and the workpieces;
a controller (CTL) operable to control the actuator to correct transverse deviation of said weld location relative to a target position on said workpieces; and
a monitoring apparatus as claimed in of any of claims 17 to 29 for detecting transverse deviation of the welding location relative to the target position.

## Patentansprüche

1. Ein Verfahren zum Überwachen des Fortschritts eines Schweißvorgangs zum Bilden einer Verbindung (220) zwischen zwei Werkstücken (230, 530), wobei der Schweißvorgang an einer Schweißstelle durchgeführt wird, wobei die Schweißstelle durch Einrichten der relativen Bewegung zwischen einem Schweißkopf (W) und den Werkstücken entlang eines Schweißwegs voranschreitet, wobei das Verfahren Folgendes beinhaltet:
(a) Verwenden eines Werkstückverfolgungssensors (S1-S3) zum Verfolgen der Position der Werkstücke in einer Richtung transversal zu dem Schweißweg auf der Basis einer Beobachtung der Werkstücke an einer Zielabtaststelle in der Nähe der Schweißstelle;
(b) Verwenden eines Schweißverfolgungssensors (T); und
(c) Vergleichen der Ergebnisse des Werkstückverfolgungssensors und des Schweißverfolgungssensors in einem gemeinsamen Referenzrahmen zum Detektieren einer transversalen Abweichung der Schweißstelle relativ zu einer Zielposition auf den Werkstücken; wobei das Verfahren **dadurch gekennzeichnet ist, dass** der Schweißverfolgungssensor ein Wärmeprofil der Werkstücke in der transversalen Richtung an einer der Schweißstelle nachgelagerten Schweißabtaststelle beobachtet.

2. Verfahren gemäß Anspruch 1, wobei Schritt (c) als vorausgehenden Schritt Schritt (cb) zum Bestimmen einer transversalen Position der Schweißnaht durch Identifizieren einer Spitzenposition innerhalb des Wärmeprofils umfasst.

3. Verfahren gemäß Anspruch 1 oder 2, wobei Schritt (c) als vorausgehenden Schritt Schritt (ca) zum Bestimmen der Zielposition auf der Basis eines transversalen Formprofils der Werkstücke, wie mittels der Beobachtung gemessen, umfasst.

4. Verfahren gemäß Anspruch 3, wobei das transversale Formprofil mittels in einer oder mehreren Ebenen transversal zu dem Schweißweg gelenkter Beleuchtung und mittels Detektieren der von den Werkstücken reflektierten Beleuchtung in einer Ebene schräg zu der/den Beleuchtungsebene(n) erhalten wird.

5. Verfahren gemäß Anspruch 4, wobei die Beleuchtung durch Laser erfolgt.

6. Verfahren gemäß Anspruch 5, wobei Schritt (a) das Erfassen eines zweidimensionalen Bilds der Werkstücke umfasst und Schritt (ca) das Extrahieren des Formprofils aus dem Bild beinhaltet.

7. Verfahren gemäß Anspruch 5, wobei die Beleuchtung durch das Gleitenlassen eines Laserpunkts durch einen Teilabschnitt der Beleuchtungsebene erfolgt und das Detektieren der reflektierten Beleuchtung durch einen Scansensor synchronisiert mit dem Gleitenlassen des Laserpunkts erfolgt.

8. Verfahren gemäß Anspruch 3, wobei Schritt (b) das Erfassen eines zweidimensionalen Bilds der Werkstücke umfasst und Schritt (ca) das Extrahieren des Formprofils aus dem Bild beinhaltet.

9. Verfahren gemäß einem der vorhergehenden Ansprüche, wobei die Zielabtaststelle an einer hinteren Seite der Werkstücke gegenüber dem Schweißkopf (W) liegt.

10. Verfahren gemäß einem der vorhergehenden Ansprüche, wobei die Schweißabtaststelle an einer hinteren Seite der Werkstücke gegenüber dem Schweißkopf (W) liegt.

11. Verfahren gemäß einem der vorhergehenden Ansprüche, wobei die Zielabtaststelle und die Schweißabtaststelle an im Wesentlichen derselben Stelle entlang des Schweißwegs liegen.

12. Verfahren gemäß Anspruch 11, wobei die Beobachtung in Schritt (a) und die Beobachtung in Schritt (b) unter Verwendung eines gemeinsamen optischen Systems (1010) durchgeführt werden.

13. Verfahren gemäß Anspruch 12, wobei die Beobachtung in Schritt (a) unter Verwendung eines Zielbildsensors (1052) durchgeführt wird, der unter Verwendung sichtbarer Wellenlängen ein Bild der Werkstücke bildet, und die Beobachtung in Schritt (b) unter Verwendung eines Wärmebildsensors (1054) durchgeführt wird, der unter Verwendung von Infrarotwellenlängen ein Bild der Werkstücke bildet.

14. Verfahren gemäß Anspruch 13, wobei die Beobachtung in Schritt (a) unter Verwendung des Zielbildsensors mithilfe von Beleuchtung in einer oder mehreren Ebenen transversal zu dem Schweißweg und schräg zu einer Sichtrichtung des Bildsensors durchgeführt wird.

15. Verfahren gemäß einem der vorhergehenden Ansprüche, ferner beinhaltend (d) das Anpassen einer transversalen Position des Schweißkopfes als Reaktion auf eine in Schritt (c) detektierte Abweichung.

16. Verfahren gemäß Anspruch 15, wobei Schritt (d) von einem automatischen Schweißkopfpositionierungssystem automatisch durchgeführt wird.

17. Eine Vorrichtung zum Überwachen eines Schweißvorgangs zum Bilden einer Verbindung (220) zwischen zwei Werkstücken (230, 530), wobei der Schweißvorgang an einer Schweißstelle durchgeführt wird, wobei die Schweißstelle durch Einrichten der relativen Bewegung zwischen einem Schweißkopf (W) und den Werkstücken entlang eines Schweißwegs voranschreitet, wobei die Vorrichtung Folgendes beinhaltet:
- einen Werkstückverfolgungssensors (S1-S3), der konfiguriert ist zum Beobachten der Werkstücke an einer Zielabtaststelle in der Nähe der Schweißstelle zum Verfolgen der Position der Werkstücke in einer zu dem Schweißweg transversalen Richtung;
- einen Schweißverfolgungssensor (T); und
- eine Verarbeitungsanordnung, die konfiguriert ist zum Vergleichen von von dem Werkstückverfolgungssensor und dem Schweißverfolgungssensor gemachten Beobachtungen in einem gemeinsamen Referenzrahmen zum Detektieren einer transversalen Abweichung der Schweißstelle relativ zu einer Zielposition auf den Werkstücken; und wobei die Vorrichtung **dadurch gekennzeichnet ist, dass** der Schweißverfolgungssensor konfiguriert ist zum Beobachten der Werkstücke an einer der Schweißstelle nachgelagerten Schweißabtaststelle zum Erhalten eines Wärmeprofils der Werkstücke in der transversalen Richtung.

18. Vorrichtung gemäß Anspruch 17, wobei die Verarbeitungsanordnung konfiguriert ist zum Bestimmen einer transversalen Position der Schweißnaht durch Identifizieren einer Spitzenposition innerhalb eines von dem Schweißverfolgungssensor erhaltenen Wärmeprofils.

19. Vorrichtung gemäß Anspruch 17 oder 18, wobei die Verarbeitungsanordnung konfiguriert ist zum Bestimmen der Zielposition auf der Basis eines transversalen Formprofils der Werkstücke, wie von dem Werkstückverfolgungssensor beobachtet.

20. Vorrichtung gemäß Anspruch 19, wobei der Werkstückverfolgungssensor zum Bereitstellen von in einer oder mehreren Ebenen transversal zu dem Schweißweg gelenkter Beleuchtung und zum Detektieren der von den Werkstücken reflektierten Beleuchtung in einer Ebene schräg zu der/den Beleuchtungsebene(n) angeordnet ist.

21. Vorrichtung gemäß Anspruch 20, wobei der Werkstückverfolgungssensor einen Laser umfasst und die Beleuchtung durch den Laser erfolgt.

22. Vorrichtung gemäß Anspruch 21, wobei der Werkstückverfolgungssensor konfiguriert ist zum Erfassen eines zweidimensionalen Bilds der Werkstücke und die Verarbeitungsanordnung konfiguriert ist zum Extrahieren des Formprofils aus dem Bild.

23. Vorrichtung gemäß Anspruch 19, wobei der Werkstückverfolgungssensor konfiguriert ist zum Erfassen eines zweidimensionalen Bilds der Werkstücke und die Verarbeitungsanordnung konfiguriert ist zum Extrahieren des Formprofils aus dem Bild.

24. Vorrichtung gemäß einem der Ansprüche 17 bis 23, wobei die Zielabtaststelle an einer hinteren Seite der Werkstücke gegenüber dem Schweißkopf (W) liegt.

25. Vorrichtung gemäß einem der Ansprüche 17 bis 24, wobei die Schweißabtaststelle an einer hinteren Seite der Werkstücke gegenüber dem Schweißkopf (W) liegt.

26. Vorrichtung gemäß einem der Ansprüche 17 bis 25, wobei die Zielabtaststelle und die Schweißabtaststelle an im Wesentlichen derselben Stelle entlang des Schweißwegs liegen.

27. Vorrichtung gemäß Anspruch 26, wobei der Werkstückverfolgungssensor und der Schweißverfolgungssensor zum Beobachten der Werkstücke durch ein optisches System angeordnet sind.

28. Vorrichtung gemäß Anspruch 27, wobei der Werkstückverfolgungssensor einen ersten Bildsensor beinhaltet, der konfiguriert ist zum Bilden eines Bilds der Werkstücke unter Verwendung sichtbarer Wellenlängen, und der Schweißverfolgungssensor einen zweiten Bildsensor beinhaltet, der konfiguriert ist zum Bilden eines Bilds der Werkstücke unter Verwendung von Infrarotwellenlängen.

29. Vorrichtung gemäß Anspruch 28, wobei der Werkstückverfolgungssensor ferner eine Beleuchtungsanordnung zum Beleuchten der Werkstücke mit Beleuchtung in einer oder mehreren Ebenen transversal zu dem Schweißweg und schräg zu einer Sichtrichtung des ersten Bildsensors beinhaltet.

30. Ein Schweißsteuersystem, das Folgendes beinhaltet:
ein Betätigungselement, das konfiguriert ist zum Anpassen einer transversalen Position einer Schweißstelle während eines Schweißvorgangs, wobei die Schweißstelle durch Einrichten der relativen Bewegung zwischen einem Schweißkopf und den Werkstücken entlang eines Schweißwegs voranschreitet;
eine Steuerung (CTL), die zum Steuern des Betätigungselements zum Korrigieren einer transversalen Abweichung der Schweißstelle relativ zu einer Zielposition auf den Werkstücken betriebsfähig ist; und
eine Überwachungsvorrichtung gemäß einem der Ansprüche 17 bis 29 zum Detektieren einer transversalen Abweichung der Schweißstelle relativ zu der Zielposition.

## Revendications

1. Un procédé de surveillance de la progression d'une opération de soudage formant un joint (220) entre deux pièces à travailler (230, 530), l'opération de soudage étant réalisée au niveau d'un emplacement de soudage, l'emplacement de soudage progressant le long d'un trajet de soudure par agencement d'un mouvement relatif entre une tête de soudage (W) et les pièces à travailler, le procédé comprenant :
(a) l'utilisation d'un capteur de suivi de pièces à travailler (S1 À S3) pour suivre la position des pièces à travailler dans une direction transversale au trajet de soudure, sur la base de l'observation des pièces à travailler au niveau d'un emplacement de captage de cible à proximité de l'emplacement de soudage ;
(b) l'utilisation d'un capteur de suivi de soudure (T) ; et
(c) la comparaison des résultats dudit capteur de suivi de pièces à travailler et dudit capteur de suivi de soudure dans un cadre de référence commun, pour détecter une déviation transversale de l'emplacement de soudage relativement à une position cible sur les pièces à travailler ; le procédé étant **caractérisé en ce que** le capteur de suivi de soudure observe un profil thermique des pièces à travailler dans ladite direction transversale au niveau d'un emplacement de captage de soudure en aval de l'emplacement de soudage.

2. Le procédé de la revendication 1, dans lequel ladite étape (c) inclut comme étape préliminaire, l'étape (cb) consistant à déterminer une position transversale de la soudure par identification d'une position de pic à l'intérieur dudit profil thermique.

3. Le procédé de la revendication 1 ou de la revendication 2, dans lequel ladite étape (c) inclut comme étape préliminaire, l'étape (ca) consistant à déterminer ladite position cible sur la base d'un profil de forme transversale des pièces à travailler mesurées par ladite observation.

4. Le procédé de la revendication 3, dans lequel ledit profil de forme transversale est obtenu par un éclairage dirigé dans un ou plusieurs plans transversaux au trajet de soudure et détection de l'éclairage réfléchi par les pièces à travailler dans un plan oblique par rapport au(x) plan(s) d'éclairage.

5. Le procédé de la revendication 4, dans lequel ledit éclairage se fait par laser.

6. Le procédé de la revendication 5, dans lequel l'étape (a) inclut la capture d'une image bidimensionnelle des pièces à travailler et l'étape (ca) comprend l'extraction dudit profil de forme à partir de ladite image.

7. Le procédé de la revendication 5, dans lequel ledit éclairage se fait par balayage d'un point laser à travers une section dudit plan d'éclairage et ladite détection de l'éclairage réfléchi se fait par un capteur de balayage synchronisé avec ledit balayage du point laser.

8. Le procédé de la revendication 3, dans lequel l'étape (b) inclut la capture d'une image bidimensionnelle des pièces à travailler et l'étape (ca) comprend l'extraction dudit profil de forme à partir de ladite image.

9. Le procédé de n'importe quelle revendication précédente, dans lequel ledit emplacement de captage de cible est au niveau d'un côté arrière des pièces à travailler, à l'opposé de ladite tête de soudage (W).

10. Le procédé de n'importe quelle revendication précédente, dans lequel ledit emplacement de captage de soudure est au niveau d'un côté arrière des pièces à travailler à l'opposé de ladite tête de soudage (W).

11. Le procédé de n'importe quelle revendication précédente, dans lequel lesdits emplacement de captage de cible et emplacement de détection de soudure sont substantiellement au même emplacement le long du trajet de soudure.

12. Le procédé de la revendication 11, dans lequel l'observation à l'étape (a) et l'observation à l'étape (b) sont réalisées à l'aide d'un système optique partagé (1010).

13. Le procédé de la revendication 12, dans lequel l'observation à l'étape (a) est réalisée à l'aide d'un capteur d'image cible (1052) formant une image des pièces à travailler à l'aide de longueurs d'onde visibles et l'observation à l'étape (b) est réalisée à l'aide d'un capteur d'image thermique (1054) formant une image des pièces à travailler à l'aide de longueurs d'onde infrarouges.

14. Le procédé de la revendication 13, dans lequel l'observation à l'étape (a) est réalisée à l'aide dudit capteur d'image cible assisté par éclairage dans un ou plusieurs plans transversaux audit trajet de soudure et obliques par rapport à une direction de visualisation dudit capteur d'image.

15. Le procédé tel quel revendiqué dans n'importe quelle revendication précédente, comprenant en outre (d) le réglage d'une position transversale de la tête de soudage en réponse à une déviation détectée à l'étape (c).

16. Le procédé de la revendication 15, dans lequel ladite étape (d) est réalisée automatiquement par un système de positionnement automatique de tête de soudage.

17. Un appareil pour surveiller une opération de soudage formant un joint (220) entre deux pièces à travailler (230, 530), l'opération de soudage étant réalisée au niveau d'un emplacement de soudage, l'emplacement de soudage progressant le long d'un trajet de soudure en agençant un mouvement relatif entre une tête de soudage (W) et les pièces à travailler, l'appareil comprenant :
- un capteur de suivi de pièces à travailler (S1 À S3) configuré pour observer les pièces à travailler au niveau d'un emplacement de captage de cible à proximité de l'emplacement de soudage afin de suivre la position des pièces à travailler dans une direction transversale au trajet de soudure ;
- un capteur de suivi de soudure (T) ; et
- un agencement de traitement configuré pour comparer des observations effectuées par ledit capteur de suivi de pièces à travailler et ledit capteur de suivi de soudure dans un cadre de référence commun, afin de détecter une déviation transversale de l'emplacement de soudage relativement à une position cible sur les pièces à travailler ; et l'appareil étant **caractérisé en ce que** le capteur de suivi de soudure est configuré pour observer les pièces à travailler au niveau d'un emplacement de captage de soudure en aval de l'emplacement de soudage afin d'obtenir un profil thermique des pièces à travailler dans ladite direction transversale.

18. L'appareil de la revendication 17, dans lequel ledit agencement de traitement est configuré pour déterminer une position transversale de la soudure par identification d'une position de pic à l'intérieur d'un profil thermique obtenu à partir du capteur de suivi de soudure.

19. L'appareil de la revendication 17 ou de la revendication 18, dans lequel ledit agencement de traitement est configuré pour déterminer ladite position cible sur la base d'un profil de forme transversale des pièces à travailler observées par ledit capteur de suivi de pièces à travailler.

20. L'appareil de la revendication 19, dans lequel le capteur de suivi de pièces à travailler est agencé pour fournir un éclairage dirigé dans un ou plusieurs plans transversaux au trajet de soudure et détecter l'éclairage réfléchi par les pièces à travailler dans un plan oblique par rapport au(x) plan(s) d'éclairage.

21. L'appareil de la revendication 20, dans lequel le capteur de suivi de pièces à travailler inclut un laser et ledit éclairage se fait par le laser.

22. L'appareil de la revendication 21, dans lequel le capteur de suivi de pièces à travailler est configuré pour capturer une image bidimensionnelle des pièces à travailler, et l'agencement de traitement est configuré pour extraire ledit profil de forme à partir de ladite image.

23. L'appareil de la revendication 19, dans lequel le capteur de suivi de pièces à travailler est configuré pour capturer une image bidimensionnelle des pièces à travailler, et l'agencement de traitement est configuré pour extraire ledit profil de forme à partir de ladite image.

24. L'appareil de n'importe lesquelles des revendications 17 à 23, dans lequel ledit emplacement de captage de cible est au niveau d'un côté arrière des pièces à travailler, à l'opposé de ladite tête de soudage (W).

25. L'appareil de n'importe lesquelles des revendications 17 à 24, dans lequel ledit emplacement de captage de soudure est au niveau d'un côté arrière des pièces à travailler à l'opposé de ladite tête de soudage (W).

26. L'appareil de n'importe lesquelles des revendications 17 à 25, dans lequel lesdits emplacement de captage de cible et emplacement de détection de soudure sont substantiellement au même emplacement le long du trajet de soudure.

27. L'appareil de la revendication 26, dans lequel le capteur de suivi de pièces à travailler et le capteur de suivi de soudure sont agencés pour observer les pièces à travailler par le biais d'un système optique.

28. L'appareil de la revendication 27, dans lequel le capteur de suivi de pièces à travailler comprend un premier capteur d'image configuré pour former une image des pièces à travailler à l'aide de longueurs d'onde visibles, et le capteur de suivi de soudure comprend un deuxième capteur d'image configuré pour former une image des pièces à travailler à l'aide de longueurs d'onde infrarouges.

29. L'appareil de la revendication 28, dans lequel ledit capteur de suivi de pièces à travailler comprend en outre un agencement d'éclairage pour éclairer les pièces à travailler avec un éclairage dans un ou plusieurs plans transversaux audit trajet de soudure et obliques par rapport à une direction de visualisation dudit premier capteur d'image.

30. Un système de commande de soudage comprenant :
un actionneur configuré pour régler une position transversale d'un emplacement de soudage pendant une opération de soudage dans laquelle ledit emplacement de soudure progresse le long d'un trajet de soudure par agencement d'un mouvement relatif entre une tête de soudage et les pièces à travailler ;
un dispositif de commande (CTL) utilisable pour commander l'actionneur afin de corriger une déviation transversale dudit emplacement de soudure relativement à une position cible sur lesdites pièces à travailler ; et
un appareil de surveillance tel que revendiqué dans n'importe lesquelles des revendications 17 à 29 pour détecter une déviation transversale de l'emplacement de soudage relativement à la position cible.
